# EUROPEAN PATENT SPECIFICATION

(11) **EP 1 586 519 B1**
(45) Date of publication and mention of the grant of the patent: **17.10.2007**
(21) Application number: 03773734.3
(22) Date of filing: 18.11.2003
(51) Int. Cl.: B65G 47/22, B65G 47/52

(54) **ADJUSTABLE UNIT FOR TRANSFERRING UPRIGHT AND ALIGNED ARTICLES FROM A CONVEYOR CONVEYING THE ARTICLES ON THEIR BASE TO A OVERHEAD CONVEYOR**
EINSTELLBARE EINHEIT ZUR ÜBERTRAGUNG AUSGERICHTETER UND AUFRECHTER ARTIKEL VON EINEM DIE ARTIKEL AUF IHRER BASIS FÖRDERNDEN FÖRDERBAND AUF EIN HÄNGEFÖRDERBAND
UNITE AJUSTABLE POUR TRANSFERER DES ARTICLES VERTICAUX ET ALIGNES D'UN CONVOYEUR CONVOYANT LES ARTICLES SUR LEUR BASE A UN CONVOYEUR A SUSPENSION

(30) Priority: 18.11.2002 ES 200202924 U
(43) Date of publication of application: 19.10.2005
(73) Proprietor: Marti Mercade, Alex, 08190 Sant Cugat Del Valles, Barcelona (ES)
(72) Inventor: Martí Mercadé, Alex, 08190 Sant Cugat del Vallès (ES); Martí Sala, Jaime, 08017 Barcelona (ES)
(74) Representative: Gislon, Gabriele
(86) International application number: PCT/ES2003/000586
(87) International publication number: WO 2004/045997

(56) References cited:
- EP-A1- 1 050 508
- WO-A1-01/42113
- GB-A- 528 265
- US-A- 4 378 665
- US-A- 4 615 521
- US-A- 4 867 299

## Description

This invention relates to an adjustable transfer unit designed for transferring upright and aligned articles from a first to a second conveyor, and more particularly for transferring articles that are upright on their base on an inlet transfer surface, provided, for example, at the outlet of an adjustable positioning machine, and an overhead outlet conveyor, adapted to convey the articles hanging from a projecting configuration provided on a top part thereof along lifting guides.

Transfer units that have a thrusting wheel provided with a plurality of radial blades along its circumference and which is driven in a rotary manner to transfer articles, such as empty, lightweight containers, from a first inlet conveyor, extending in one direction, to a second outlet conveyor, extending in a second direction, have been known for a long time. This type of transfer units comprise, in addition to the said thrusting wheel with its corresponding radial blades, a curved support track, arranged below said radial blades and extending at least between a delivery end of the first inlet conveyor and a reception end of the second outlet conveyor, and rail means arranged along at least one part of said support track. The thrusting wheel is connected to driving means provided to make it rotate at a regular speed in one direction, and thereby the radial blades move around and receive, one by one, the articles coming from said delivery end of the inlet conveyor, push said articles moving them along the support track and deliver them to the said reception end of the outlet conveyor.

Generally, both the first inlet conveyor and the second outlet conveyor are basic conveyors, in other words, of the type that are adapted to convey articles, upright on their base, on a transfer surface, such as a continuous mobile conveyor belt, or a stationary surface along which the articles are dragged by mobile pushing elements. Therefore, the support track of the transfer unit is substantially level both with a transfer surface of the inlet conveyor and a transfer surface of the outlet conveyor and, consequently, the transfer unit is useful for articles of different heights.

In some applications it is desirable that the outlet conveyor is an overhead conveyor, of a known type provided with lifting guides along which the articles are conveyed hanging from a projecting configuration on a top part thereof, which configuration, in the case of lightweight containers, is an annular flange provided on the base of the neck thereof. The dimensions of said neck and flange are standard and do not vary with the different sizes of the containers. However, when the inlet conveyor is a conveyor and the outlet conveyor is an overhead conveyor, there is the drawback in that the said lifting guides of the overhead conveyor must be at a certain height from the support track of the transfer unit, according to the height of the article and, therefore, the transfer unit is only useful for articles of this one size.

It is also known that said transfer surface of the first conveyor is a stationary transfer surface provided at the outlet of a rotary article positioning machine. In this case, the transfer unit receives the upright and aligned articles from a transfer surface associated with deflecting means that divert the articles from a stationary annular support plane arranged beneath the open bottom walls of drop chutes joined to a rotary structure of the machine, on which plane the articles are pushed in the upright position by radial walls of the said drop chutes.

The machines of this type are well known and comprise an upper hopper in which the articles are received in a disorderly fashion in bulk, with a rotary bottom wall associated with said rotary structure and housings provided along the circumference of said bottom wall and also associated with the rotary structure. These housings are angled tangentially and each one has an open bottom wall placed above an open widened mouth of a corresponding drop chute. Radial walls of said housings drag the articles therein in a horizontal position onto another higher stationary plane, arranged between said open bottom walls of the housings and said open mouths of the drop chutes. The said radial walls of the housings include end stops and/or supports for supporting a different final configuration of the articles, which, in the case of containers, is the neck thereof, irrespective of the front or rear position of said different final configuration inside the housing, and the said higher stationary plane includes an interruption in one section of its circumference where articles travelling in the housings fall upright into their corresponding drop chute. Stationary deflecting means are provided to divert the articles travelling upright in the drop chutes towards an outlet support surface, which can be, for example, said transfer surface at the entrance of said thrusting wheel.

International patent application PCT/ES02/00467, in the name of the current applicant, describes a rotary article positioning machine of the type described above in which both the housings and the drop chutes are adjustable to different size articles and where the said higher stationary plane includes several of said interruptions while the drop chutes include various areas, so that the machine can load two or four articles, depending on the size thereof, in each drop chute during one single turn. This same patent application introduces a transfer unit of the type described above in which the thrusting wheel is made up of first and second circular, coaxial structures, and the radial blades include first radial blades attached to said first circular structure and second radial blades attached to said second circular structure, at predetermined angular separations along their respective circumferences. Adjusting means are provided to adjust the relative angular position between both first and second circular, coaxial structures, and thus adapt the separations between said first and second radial blades to different size articles, according to the size of the articles handled by the positioning machine. However, in this transfer unit the above mentioned problem with the overhead outlet conveyor persists, since it does not include vertical adjustment means for adapting the unit to different height articles.

The object of this invention is to provide an adjustable transfer unit for transferring upright and aligned articles from a first to a second conveyor, provided with vertical adjustment means for adapting the unit to different size articles in order to transfer different size articles from an inlet conveyor, for example, a transfer surface from the outlet of an adjustable rotary positioning machine, to an overhead outlet conveyor.

The preceding object is achieved, according to the principles of this invention, by providing an adjustable transfer unit for transferring upright and aligned articles from a first to a second conveyor, which includes a thrusting wheel provided with radial blades, a curved support track provided below said radial blades, and railing means along at least one part of said support track. Driving means are adapted to make said thrusting wheel rotate and therefore receive via the radial blades, one by one, the articles coming from a delivery end of said first conveyor, which is an inlet conveyor, push the articles by moving them along the support track and deliver the articles to a reception end of said second conveyor, which is an overhead outlet conveyor. The support track extends at least between said delivery and reception ends of the inlet and outlet conveyors, which are respectively of the types described above. The transfer unit support track is associated with vertical movement means that can be driven to adapt the vertical distance between the support track and said lifting guides of the outlet conveyor to different size articles. The lifting guides of the overhead outlet conveyor are placed at a suitable height from the transfer surface of the inlet conveyor for small size articles, and the transfer unit support track can be moved by said vertical movement means between a top position suitable for said small size articles, in which the support track is substantially level with said transfer surface of the inlet conveyor, and one or more lower positions suitable for medium or large size articles, in which the support track is at a lower level than said transfer surface of the inlet conveyor, and at suitable vertical distances from the lifting guides of the overhead outlet conveyor respectively for said medium or large size articles. In said one or various lower positions, the articles pass from the transfer surface to the support track placed at a lower level by falling by their own weight while said articles are moved inside areas delimited by the radial blades, said railing means, and inner wall means joined to the thrusting wheel. Advantageously, this arrangement of the vertical adjustment means combines with means for adjusting the separation distances between the radial blades on the thrusting wheel, that consist of first and second circular coaxial structures, with respective first and second radial blades attached thereto at predetermined angular separations alternated along the respective circumferences thereof, and with adjustment means arranged to adjust the relative angular position between both first and second circular, coaxial structures, as described above.

This way, the adjustable transfer unit of this invention includes all the necessary adjustment means for transferring different size articles from, for example, an adjustable positioning machine with multiple areas in the drop chutes, such as the one presented in the referenced International patent application PCT/ES 02/00467, in the name of the current applicant, to the lifting guides of an overhead outlet conveyor, of the type described above.

These and other advantages and characteristics will be more comprehensible from the following detailed description of an embodiment provided with reference to the attached drawings, in which:
Figure 1 is a diagrammatic plan view of the transfer unit according to the invention arranged between an inlet conveyor, which is an outlet device from a positioning machine, and an overhead outlet conveyor, with the radial blades of the thrusting wheel adjusted to small size articles;
Figure 2 is a detail of the transfer unit of Fig. 1 with the radial blades of the thrusting wheel adjusted to large size articles;
Figure 3 is a diagrammatic view in section of the transfer unit of this invention arranged between an inlet conveyor and an overhead outlet conveyor, and with the vertical position of the support track adjusted to small size articles; and
Figure 4 is a diagrammatic view in section of the proposed transfer unit arranged between an inlet conveyor and an overhead outlet conveyor, and with the vertical position of the support track adjusted to large size articles.

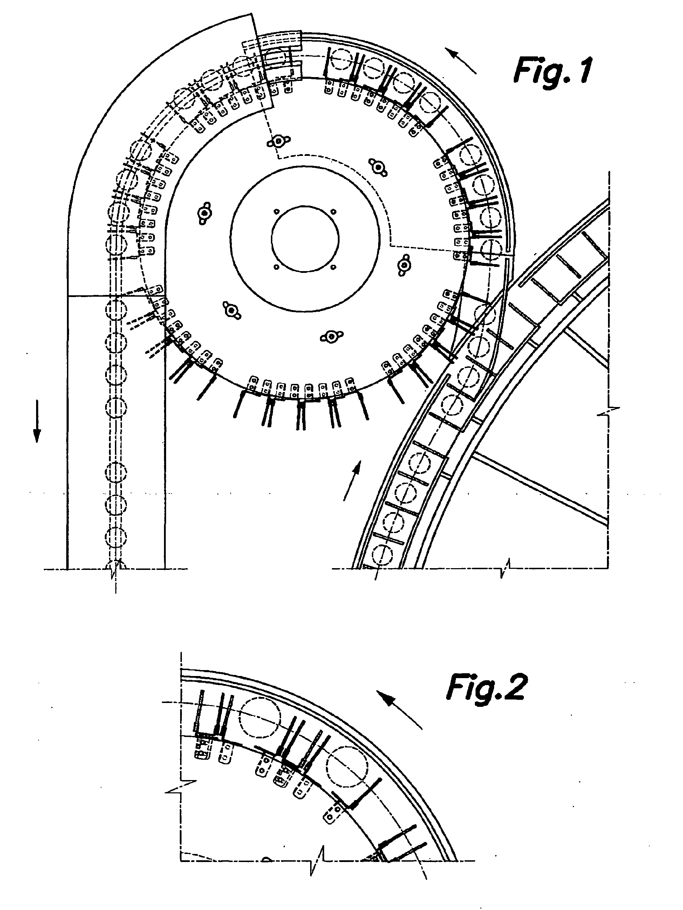

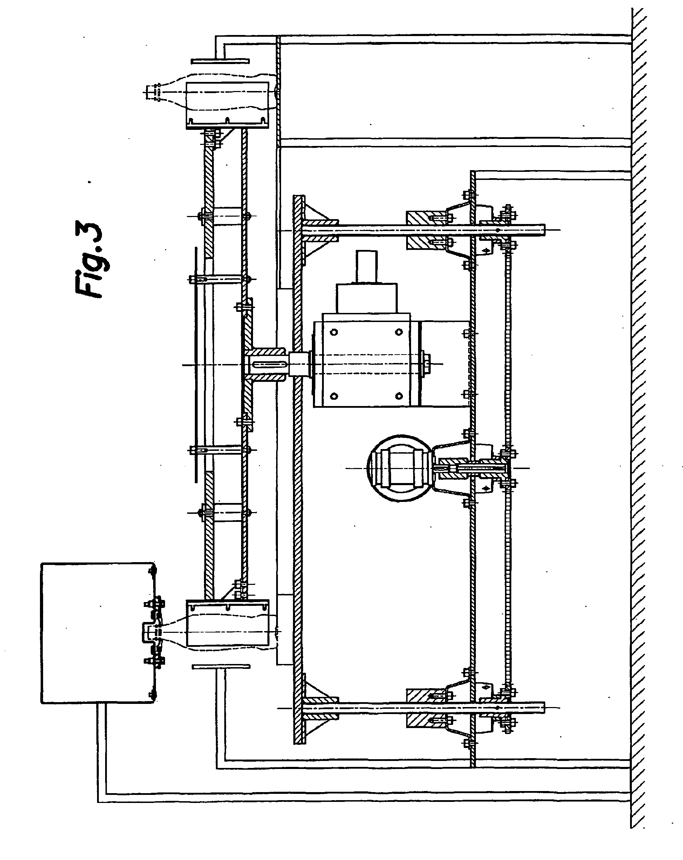

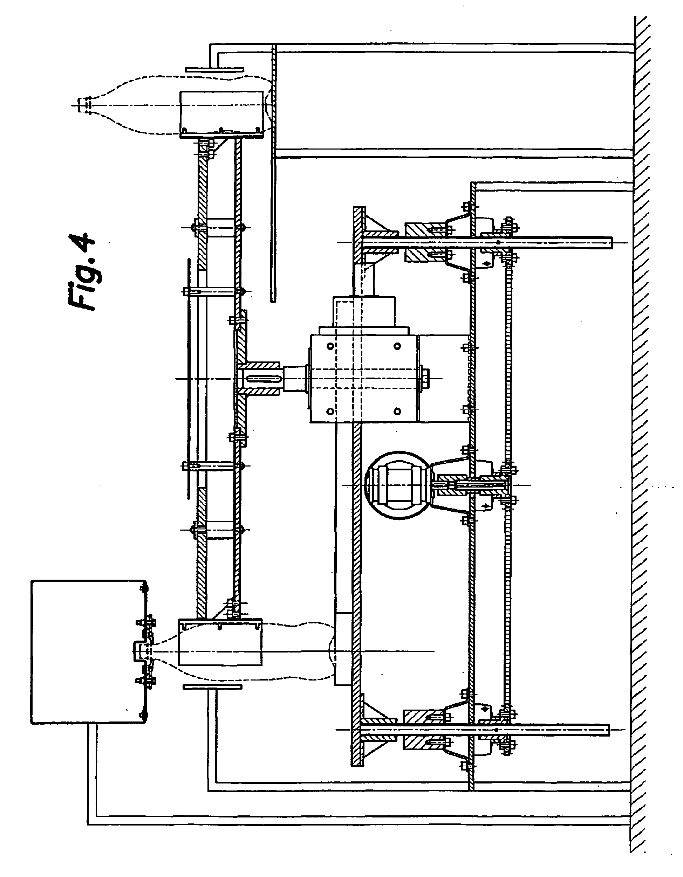

First of all, with reference to Fig. 1, this is a plan view of an adjustable transfer unit of this invention arranged to transfer upright and aligned articles from a first conveyor, or inlet conveyor 30, to a second conveyor, outlet conveyor 40, where said inlet conveyor 30 is a conveyor adapted to convey articles A, B, upright on their bases A1, B1, on a transfer surface 32 (see also Figs. 3 and 4) and said outlet conveyor 40 is an overhead conveyor adapted to convey articles A, B hanging by a projecting configuration A2, B2 on a top part thereof along lifting guides 42 of the conveyor (see also Figs. 3 and 4). Articles A, B shown in the figures are empty, lightweight bottle type containers, in which said base A1, B1 is a base or bottom wall of the bottle and said projecting configuration A2, B2 is a flange or annular tab provided at the base of the bottle neck. The dimensions of said neck and said flange are standard and do not vary with the different sizes of the containers A, B. The transfer unit includes a thrusting wheel 1 provided with radial blades 2, 3, a curved support track 4 arranged below said radial blades 2, 3, between a delivery end 31 of said inlet conveyor 30 and a reception end 41 of said outlet conveyor 40, and railing means 5 along at least one part of said support track 4. Driving means 6 are provided to rotate said thrusting wheel 1 and radial blades 2, 3 attached thereto receive, one by one, articles A, B coming from said delivery end 31 of inlet conveyor 30, push them by moving them along support track 4 and deliver them to the said reception end 41 of outlet conveyor 40.

With reference now to Figures 3 and 4, support track 4 of the transfer unit is connected to vertical adjustment means 7, 8 that can be driven to adapt the vertical distance between support track 4 and said lifting guides 42 of outlet conveyor 40 to different size articles A, B. Support track 4 can be moved by said vertical movement means 7, 8 between a top position, shown in Fig. 3, suitable for small size articles A, and in which support track 4 is substantially level with said transfer surface 32 of inlet conveyor 30, and at least a lower position, shown in Fig. 4, suitable for medium or large size articles B, and in which support track 4 is at a lower level than said transfer surface 32 of inlet conveyor 30. In this lower position, articles B pass from transfer surface 32 to support track 4 by falling by their own weight as said articles are moved in areas delimited by radial blades 2, 3, said railing means 5, and inner wall means 13, 14 associated with thrusting wheel 1. Said inner wall means 13, 14 include first and second inner wall portions 13, 14 attached respectively to first and second circular, coaxial structures 11, 12 and arranged on opposite sides of the respective first and second radial blades 2, 3 (Figs. 1 and 2). Said first and second inner wall means 13, 14 are placed at different radial distances from the centre of thrusting wheel 1 so that the former rest at least partially imposed on the others (Fig. 2) when the separations between first and second radial blades 2, 3 are adapted for large size articles B.

Said vertical movement means 7, 8 include at least one pair of driving units each one made up of a vertical sleeve 7 attached to a platform 20 that supports or includes support track 4, and is coupled to a nut 8 mounted in a captive rotary fashion in a fixed support structure 21, which also supports thrusting wheel 1 and railing means 5. Nuts 8 are joined to respective pinion gears or pulleys 22 connected together by means of a flexible traction element 9, such as a chain or belt. This flexible traction element 9 is also passed over a pinion gear or drive pulley 15 connected to a power shaft of driving means 10, so that both vertical sleeves 7 can turn in one direction or another driven by said driving means 10 to vary the vertical position of support track 4. By including suitable vertical guide means (not shown) it would be possible to vary the vertical position of support track 4 using a single vertical sleeve 7 and nut 8 unit. Driving means 10 preferably comprise a reducer unit, although they could also be manually driven, for example, by means of a handle (not shown), since said adjustment of the vertical position of support track 4 is only made every now and again, when the size of the articles to be handled changes.

Thrusting wheel 1 is made up of first and second circular, coaxial structures 11, 12, and radial blades 2, 3 comprise first radial blades 2 attached to said first circular structure 11 and second radial blades 3 attached to said second circular structure 12, at predetermined angular separations alternated along the respective circumferences thereof (see also Figs. 1 and 2). In the interest of clarity in the drawings, in Figs. 3 and 4 only one first radial blade 2 is shown attached to the first circular structure 11 and a second radial blade 3 attached to the second circular structure 12 and the railing means 5 are illustrated in a very diagrammatic manner only in front of said first and second radial blades 2 and 3. The afore-mentioned driving means 6 of thrusting wheel 1 include, for example, a reducer unit 6 coupled to the first circular coaxial structure 11, which in turn is joined to the second circular coaxial structure 12 by adjustment and attachment means 16, 17, 18 provided to adjust the relative angular position between both first and second circular, coaxial structures 11, 12 in order to adapt the separations between said first and second radial blades 2, 3 to different size articles A, B and to mutually set both first and second circular coaxial structures 11, 12 in a selected angular position. Said adjustment and attachment means 16, 17, 18 include guide means 16 in the form of elongated openings with a curved trajectory with respect to the centre of thrusting wheel 1 in the second circular coaxial structure 12 and guide followers 17 in the form of studs 17 attached to the first circular coaxial structure 11 and inserted in said elongated openings 16 to move along same. Releasable attachment means 18, in the form of nuts coupled to threads on said studs 17, are provided to block the first and second circular coaxial structures 11, 12 together in the selected angular position. Preferably, studs 17 are arranged in the ends of column shaped separators 19 attached to the first circular coaxial structure 11 and the second circular coaxial structure 12 rests on said separators 19. For a person skilled in the art, it is obvious that an equivalent assembly would be obtained by attaching separators 19 and studs 17 to the second circular structure 12 and providing elongated openings 16 in the fist circular structure 11, and/or coupling driving means 6 of thrusting wheel 1 to the second circular coaxial structure 12.

With reference again to Figs. 1 and 2, it will be observed that the said predetermined angular separations according to which the first and second radial blades 2, 3 are arranged along the circumferences of their respective first and second circular coaxial structures 11, 12 have empty spaces between groups of four couples of first and second radial blades 2 and 3. This is like this because said transfer surface 32 of delivery end 31 of inlet conveyor 30 is level with a stationary support plane 51 arranged below the open bottom walls of drop chutes 52 associated with a rotary structure 53 of an adjustable rotary machine 50 that positions articles like the one described in the referenced International patent application PCT/ES 02/00467, in the name of the current applicant. In this adjustable rotary machine 50, the articles, once upright and aligned, are pushed along said stationary support plane 51 by walls of said drop chute 52 and diverted towards a support track 4 by stationary deflecting means 54. Drop chutes 52 have multiple compartments 55 of adjustable width for different size articles A, B. When positioning machine 50 is adjusted to handle small size articles A, it is capable of filling four of said small size articles A in compartments 55 of each drop chute 52 during one turn and the angular separations of radial blades 2, 3 are adjusted, as shown in Fig. 1, to receive small size articles A in individual groups of four. When positioning machine 50 is adjusted to handle large size articles B, it is capable of filling two of said large size articles B in compartments 55 of each drop chute 52 during one turn and the angular separations of radial blades 2, 3 are adjusted, as shown in Fig. 2, to receive large size articles B in individual groups of two. Also, driving means 6 rotate thrusting wheel 1 at a speed such that radial blades 2, 3 thereof move at the same tangential speed as drop chutes 52 of rotating structure 53 of said positioning machine 50.

A person skilled in the art will be able to introduce various changes and modifications without departing from the scope of this invention, which is defined by the attached claims.

## Claims

1. Adjustable transfer unit for transferring upright and aligned articles from a first to a second conveyor, of the type comprising a thrusting wheel (1) driven in a rotary fashion by driving means (6) and having radial blades (2, 3), a curved support track (4) provided below said radial blades (2, 3) between a delivery end (31) of the inlet conveyor (30) and a reception end (41) of the outlet conveyor (40), and railing means (5) along at least one part of said support track (4), **characterised in that** said inlet conveyor (30) is a conveyor adapted to convey articles (A, B) upright on their base (A1, B1) on a transfer surface (32) and said outlet conveyor (40) is an overhead conveyor adapted to convey articles (A, B) hanging from a projecting configuration (A2, B2) on a top part thereof along lifting guides (42) of the overhead outlet conveyor (40), with said support track (4) of the transfer unit being connected to vertical movement means (7, 8) that can be driven to adapt the vertical distance between support track (4) and said lifting guides (42) of the outlet conveyor (40) to articles (A, B) having said projecting configuration (A2, B2) at different heights.

2. Unit, according to claim 1, **characterised in that** said support track (4) can be moved by said vertical movement means (7, 8) between a top position suitable for small size articles (A), in which support track (4) is substantially level with said transfer surface (32) of inlet conveyor (30), and at least one lower position suitable for medium or large size articles (B), in which support track (4) is at a lower level than said transfer surface (32) of inlet conveyor (30), with articles (B) passing from transfer surface (32) to support track (4) by falling by their own weight as they are moved within areas delimited at least by radial blades (2, 3) and said railing means (5).

3. Unit, according to claim 2, **characterised in that** said vertical movement means (7, 8) include at least one unit of a vertical sleeve (7) and nut (8).

4. Unit, according to claim 2, **characterised in that** said vertical movement means (7, 8) include at least one pair of vertical sleeve (7) and nut (8) units connected together by means of a flexible traction element (9), such as a chain or belt, which flexible traction element (9) is driven by a pinion gear or drive pulley (15) connected to a power shaft of driving means (10) to rotate said vertical sleeves (7) in one direction or another.

5. Unit, according to claim 4, **characterised in that** said driving means (10) include a reducer unit.

6. Unit, according to claim 1, **characterised in that** thrusting wheel (1) is made up of first and second circular structures (11, 12), coaxial, and radial blades (2, 3) include first radial blades (2) attached to said first circular structure (11) and second radial blades (3) attached to said second circular structure (12), at predetermined angular separations along their respective circumferences, with adjustment and attachment means being provided (16, 17, 18) to adjust the relative angular position between both first and second circular coaxial structures (11, 12) in order to adapt the separations between said first and second radial blades (2, 3) to different size articles (A, B).

7. Unit, according to claim 6, **characterised in that** it includes first and second inner wall parts (13, 14) attached respectively to first and second circular coaxial structures (11, 12) and arranged on opposite sides of respective first and second radial blades (2, 3), with said first and second inner wall parts (13, 14) being placed at different radial distances from the centre of thrusting wheel (1) so that the former can rest at least partially superimposed on the latter when the separations between first and second radial blades (2, 3) are reduced.

8. Unit, according to claim 6, **characterised in that** said driving means (6) of thrusting wheel (1) include a reducer unit coupled to one of said first or second circular coaxial structures (11, 12) which in turn is joined to the other of said first or second circular coaxial structures (11, 12) by means of adjustment and attachment means (16, 17, 18).

9. Unit, according to claim 6, **characterised in that** adjustment and attachment means (16, 17, 18) include guide means (16) of curved trajectory with respect to the centre of thrusting wheel (1) in one of said first or second circular coaxial structures (11, 12), guide followers (17) being attached to the other of said first or second circular coaxial structures (11, 12) and arranged to move along said guide means (16), and releasable attachment means (18) for blocking first and second circular coaxial structures (11, 12) together in a selected angular position.

10. Unit, according to claim 9, **characterised in that** said guide followers (17) are provided at the ends of separators (19) attached to one of said first or second circular coaxial structures (11, 12), with the other of said first or second circular coaxial structures (11, 12) resting on said separators (19).

11. Unit, according to claim 1, **characterised in that** a delivery end of inlet conveyor (30) is made up of a transfer surface (32) level with a stationary support plane (51) arranged below the open bottom walls of drop chutes (52) associated with a rotary structure (53) of an article positioning machine (50), with said articles being pushed along said stationary support plane (51) by walls of said drop chutes (52) and diverted towards said transfer surface (32) by stationary deflecting means (54).

12. Unit, according to claim 6, **characterised in that** a delivery end of inlet conveyor (30) is made up of a transfer surface (32) level with a stationary support plane (51) arranged below the open bottom walls of drop chutes (52) associated with a rotary structure (53) of an adjustable article positioning machine (50), with said articles being pushed along said stationary support plane (51) by walls of said drop chutes (52) and diverted towards said transfer surface (32) by stationary deflecting means (54), with drop chutes (52) of said adjustable positioning machine (50) having multiple compartments (55) of adjustable width for different size articles (A, B), with the adjustable positioning machine (50) being capable of filling several of said compartments (55) of each drop chute (52) with upright articles (A, B) during each turn of said rotary structure (53).

13. Unit, according to claim 12, **characterised in that** said predetermined angular separations between radial blades (2, 3) along the respective first and second circular coaxial structures (11, 12) are adapted to the separations between drop chutes (52) in the rotary structure (53) of the adjustable positioning machine (50) and can be adjusted according to the adjustment of compartments (55) in drop chutes (52).

14. Unit, according to claim 11, **characterised in that** said driving means (6) rotate thrusting wheel (1) at a speed such that the radial blades thereof (2, 3) move at the same tangential speed as the drop chutes of rotary structure (53) of said adjustable positioning machine (50).

## Patentansprüche

1. Einstellbare Transfereinheit zur Übergabe aufrechter und ausgerichteter Artikel von einer ersten an eine zweite Fördereinheit, bestehend aus einem Schubrad (1), das von Antriebsmitteln (6) in Drehung versetzt wird, und radial angebrachten Flügel (2, 3), einer gebogenen Führungsspur (4) unterhalb der erwähnten radialen Flügel (2, 3) zwischen einer Übergabeseite (31) der Eingangsfördereinheit (30) und einer Annahmeseite (41) der Ausgangsfördereinheit (40) und Führungsmitteln (5) entlang zumindest einer Seite der erwähnten Führungsspur (4), **dadurch gekennzeichnet, dass** die erwähnte Eingangsfördereinheit (30) eine Fördereinheit ist, die zur Beförderung aufrechter Artikel (A, B) auf der Auflage (A1, B1) auf einer Transferfläche (32) geeignet ist, und dass die Ausgangsfördereinheit (40) eine Überkopf-Fördereinheit ist, die zur Beförderung von hängenden Artikeln (A, B) an einer überstehenden Konfiguration (A2, B2) an einem oberen Abschnitt entlang von Hebeführungen (42) der Überkopf-Ausgangsfördereinheit (40) geeignet ist, wobei die Führungsspur (4) der Transfereinheit mit senkrechten Bewegungselementen (7, 8) verbunden ist, die zur Anpassung des senkrechten Abstands zwischen der Führungsspur (4) und den Hebeführungen (42) der Ausgangsfördereinheit (40) zu den Artikeln (A, B) verstellt werden kann, wobei sich die überstehende Konfiguration (A2, B2) auf unterschiedlichen Höhen befindet.

2. Einheit nach Anspruch 1, **dadurch gekennzeichnet, dass** die erwähnte Führungsspur (4) durch die erwähnten senkrechten Bewegungselemente (7, 8) zwischen einer oberen Position, die für kleinere Artikel (A) geeignet ist, und wo sich die Führungsspur (4) praktisch auf einer Ebene mit der Transferfläche (32) der Eingangsfördereinheit (30) befindet, und zumindest einer niedrigeren Position, die für mittlere und größere Artikel (B) geeignet ist, wo sich die Führungsspur (4) auf einer niedrigeren Ebene als die Transferfläche (32) der Eingangsfördereinheit (30) befindet, bewegt werden kann, wobei die Artikel (B) von der Transferfläche (32) auf die Führungsspur (4) übergeben werden, indem sie durch ihr eigenes Gewicht bei der Bewegung in Zonen fallen, die zumindest durch radiale Flügel (2, 3) und deren Führungsmittel (5) begrenzt werden.

3. Einheit nach Anspruch 2, **dadurch gekennzeichnet, dass** die erwähnten senkrechten Bewegungsmittel (7, 8) mindestens eine Einheit aus senkrechter Buchse (7) und Mutter (8) umfassen.

4. Einheit nach Anspruch 2, **dadurch gekennzeichnet, dass** die erwähnten senkrechten Bewegungsmittel (7, 8) mindestens zwei Einheiten aus senkrechten Buchsen (7) und Muttern (8) umfassen, die untereinander durch ein flexibles Zugelement (9) wie z. B. eine Kette oder einen Riemen verbunden sind, wobei das flexible Zugelement (9) durch ein Zahnrad oder eine Riemenscheibe (15) angetrieben wird, das bzw. die an der Welle einer Antriebseinheit (10) angeschlossen ist, um die senkrechten Buchsen (7) in die eine oder andere Richtung zu drehen.

5. Einheit nach Anspruch 4, **dadurch gekennzeichnet, dass** die Antriebseinheit (10) eine Untersetzungseinheit aufweist.

6. Einheit nach Anspruch 1, **dadurch gekennzeichnet, dass** das Schubrad (1) aus einer ersten und einer zweiten koaxialen Ringstruktur (11, 12) besteht, und dass die radialen Flügel (2, 3) erste radiale Flügel (2), die an der ersten Ringstruktur (11) befestigt sind, und zweite radiale Flügel (3), die an der zweiten Ringstruktur (12) befestigt sind, in einem bestimmten Winkelabstand auf deren jeweiligem Umfang umfassen, wobei Einstell- und Haltevorrichtungen (16, 17, 18) vorgesehen sind, um die relative Winkelposition zwischen der ersten und zweiten koaxialen Ringstruktur (11, 12) einzustellen, um den Abstand zwischen den ersten und zweiten radialen Flügeln (2, 3) an die verschiedenen Artikelgrößen (A, B) anpassen zu können.

7. Einheit nach Anspruch 6, **dadurch gekennzeichnet, dass** erste und zweite innere Wandabschnitte (13, 14) vorhanden sind, die an jeweils der ersten und zweiten koaxialen Ringstruktur (11, 12) befestigt und auf gegenüber liegenden Seiten der ersten bzw. zweiten radialen Flügel (2, 3) angeordnet sind, wobei der erste und zweite innere Wandabschnitt (13, 14) in unterschiedlichem radialen Abstand zur Mitte des Schubrads (1) positioniert sind, so dass der erste Wandabschnitt zumindest teilweise den zweiten Wandabschnitt überlagern kann, wenn die Abstände zwischen den ersten und zweiten radialen Flügeln (2, 3) verkleinert werden.

8. Einheit nach Anspruch 6, **dadurch gekennzeichnet, dass** die erwähnten Antriebsmittel (6) des Schubrads (1) eine Untersetzungseinheit umfasst, die mit einer der ersten oder zweiten koaxialen Ringstruktur (11, 12) verbunden ist, die wiederum am anderen Ende der ersten oder zweiten koaxialen Ringstruktur (11, 12) mit Einstell- und Haltevorrichtungen (16, 17, 18) verbunden ist.

9. Einheit nach Anspruch 6, **dadurch gekennzeichnet, dass** die Einstell- und Haltevorrichtungen (16, 17, 18) Führungselemente (16) mit gebogenem Verlauf zur Mitte des Schubrads (1) in einer der ersten oder zweiten koaxialen Ringstruktur (11, 12) umfassen, wobei Führungsanhänger (17) an der anderen der ersten oder zweiten koaxialen Ringstruktur (11, 12), die sich entlang den Führungselementen (16) bewegen, und lösbare Befestigungselemente (18) zur Blockierung der ersten und zweiten koaxialen Ringstrukturen (11, 12) in einer ausgewählten Winkelposition angeordnet sind.

10. Einheit nach Anspruch 9, **dadurch gekennzeichnet, dass** die Führungsanhänger (17) an den Enden von Trennelementen (19) an einer der ersten oder zweiten koaxialen Ringstruktur (11, 12) befestigt sind, wobei die andere der ersten oder zweiten koaxialen Ringstruktur (11, 12) auf diesen Trennelementen (19) aufliegt.

11. Einheit nach Anspruch 1, **dadurch gekennzeichnet, dass** die Übergabeseite der Eingangsfördereinheit (30) aus einer Transferfläche (32) mit stationärer Trägerebene (51) besteht, die unterhalb der offenen Bodenwänden von Rutschen (52) angeordnet sind, und die mit einer Drehstruktur (53) einer Artikelpositioniermaschine (50) verbunden ist, wobei die Artikel entlang der stationären Trägerebene (51) durch die Wände der Rutschen (52) geschoben und durch stationäre Trennelemente (54) zu der Transferfläche (32) aufgeteilt werden.

12. Einheit nach Anspruch 6, **dadurch gekennzeichnet, dass** die Übergabeseite der Eingangsfördereinheit (30) aus einer Transferfläche (32) mit stationärer Trägerebene (51) besteht, die unterhalb der offenen Bodenwänden von Rutschen (52) angeordnet sind, und die mit einer Drehstruktur (53) einer Artikelpositioniermaschine (50) verbunden ist, wobei die Artikel entlang der stationären Trägerebene (51) durch die Wände der Rutschen (52) geschoben und durch stationäre Trennelemente (54) zu der Transferfläche (32) aufgeteilt werden, wobei die Rutschen (52) der einstellbaren Positioniermaschine (50) eine Vielzahl von Fächern (55) mit einstellbarer Breite für verschiedene Artikelgrößen (A, B) aufweisen, und wobei die einstellbare Positioniermaschine (50) in der Lage ist, mehrere dieser Fächer (55) jeder Rutsche (52) mit aufrechten Artikeln (A, B) bei jeder Drehung der erwähnten Drehstruktur (53) zu füllen.

13. Einheit nach Anspruch 12, **dadurch gekennzeichnet, dass** die vordefinierten Winkelabstände zwischen den radialen Flügeln (2, 3) entlang der ersten und zweiten koaxialen Ringstruktur (11, 12) an die Abstände zwischen den Rutschen (52) in der Drehstruktur (53) der einstellbaren Positioniermaschine (50) angepasst sind, und entsprechend der Einstellung der Fächer (55) in den Rutschen (52) eingestellt werden können.

14. Einheit nach Anspruch 11, **dadurch gekennzeichnet, dass** die Antriebsmittel (6) das Schubrad (1) mit einer solchen Geschwindigkeit drehen, dass dessen radiale Flügel (2, 3) sich mit derselben tangentialen Geschwindigkeit wie die Rutschen der Drehstruktur (53) der einstellbaren Positioniermaschine (50) bewegen.

## Revendications

1. Unité de transfert réglable pour transférer des articles verticaux et alignés d'un premier à un deuxième convoyeur, du genre comportant une roue pousseuse (1) entraînée pour tourner par des moyens d'entraînement (6) et ayant des pales radiales (2,3), une piste de support courbée (4) étant prévue au-dessous de ces pales radiales (2,3) entre une extrémité de décharge (31) du convoyeur d'entrée (30) et une extrémité de réception (41) du convoyeur de sortie (40) et des moyens de balustrade (5) le long au moins d'une partie de cette piste de support (4) **caractérisée en ce que** ce convoyeur d'entrée (30) est un convoyeur adapté pour convoyer des articles (A, B) verticaux sur leur base (AI, BI) sur une surface de transfert (32) et ce convoyeur de sortie (40) est un convoyeur aérien adapté pour convoyer des articles (A, B) suspendus d'une configuration en porte-à-faux (A2, B2) au-dessus d'eux le long des guides portantes (42) du convoyeur de sortie aérien (40) cette piste de support (4) de l'unité de transfert étant reliée à des moyens de déplacement vertical (7, 8) pouvant être entraînés pour adapter l'écart vertical entre la piste de support (4) et ces guides portantes (42) du convoyeur de sortie (40) aux articles (A, B) ayant cette configuration en porte-à-faux (A2, B2) à des hauteurs différentes.

2. Unité, conformément à la revendication 1, **caractérisée en ce que** cette piste de support (4) peut être déplacée par ces moyens de déplacement vertical (7, 8) entre une position supérieure adaptée pour des articles ayant une petite taille (A), dans laquelle la piste de support (4) est sensiblement au même niveau que cette surface de transfert (32) du convoyeur d'entrée (30) et au moins une position inférieure adaptée pour des articles ayant une taille moyenne ou grande (B), dans laquelle la piste de support (4) est à un niveau inférieur à celui de la surface de transfert (32) du convoyeur d'entrée (30), les articles (B) passant de la surface de transfert (32) à la piste de support (4) en tombant de leur propre poids lorsqu'ils sont déplacés à l'intérieur des régions délimitées par au moins des pales radiales (2, 3) et ces moyens de balustrade (5).

3. Unité conformément à la revendication 2, **caractérisée en ce que** ces moyens de déplacement vertical (7, 8) comportent au moins une unité de manchon vertical (7) et écrou (8).

4. Unité conformément à la revendication 2, **caractérisée en ce que** ces moyens de déplacement vertical (7, 8) comportent au moins une paire d'unités de manchon vertical (7) et écrou (8) reliés l'un à l'autre au moyen d'un élément de traction flexible (9) tel qu'une chaîne ou une bande, cet élément de traction flexible (9) est entraîné par un pignon ou une poulie d'entraînement (15) reliée à un arbre moteur des moyens d'entraînement (10) pour faire tourner ces manchons verticaux (7) dans un sens ou dans l'autre.

5. Unité, conformément à la revendication 4, **caractérisée en ce que** ces moyens d'entraînement (10) comportent une unité de réducteur.

6. Unité, conformément à la revendication 1, **caractérisée en ce que** la roue pousseuse (1) comporte une première et une deuxième structures (11,12), coaxiales et les pales radiales (2, 3) comportent des premières pales radiales (2) reliées à cette première structure circulaire (11) et des deuxièmes pales radiales (3) reliées à cette deuxième structure circulaire (12) à des écarts angulaires prédéterminés le long de leurs circonférences respectives, des moyens de réglage et de liaison y étant prévus (16, 17, 18) pour régler la position angulaire relative entre les première et deuxième structures coaxiales circulaires (11, 12) afin d'adapter les écarts entre ces première et deuxième pales radiales (2, 3) à des articles ayant des tailles différentes (A, B).

7. Unité conformément à la revendication 6, **caractérisée en ce qu'**elle comporte des première et deuxième parties de paroi interne (13, 14) respectivement reliées à une première et deuxième structures coaxiales circulaires (11, 12) et aménagées sur des côtés opposés des première et deuxième pales respectives (2, 3) ces première et deuxième parties de paroi interne (13, 14) étant placées à des distances radiales différentes du centre de la roue pousseuse (1) de sorte que la première puisse reposer, au moins en partie, superposée sur la dernière lorsque les écarts entre les première et deuxième pales radiales (2, 3) sont faibles.

8. Unité, conformément à la revendication 6, **caractérisée en ce que** ces moyens d'entraînement (6) de la roue pousseuse (1) comportent une unité de réducteur couplée à une de ces première ou deuxième structures coaxiales circulaires (11, 12) qui, à son tour est reliée à l'autre de ces première ou deuxième structures coaxiales circulaires (11,12) par des moyens de réglage et de liaison (16, 17, 18).

9. Unité conformément à la revendication 6, **caractérisée en ce que** les moyens de réglage et de liaison (16, 17, 18) comportent des moyens de guidage (16) ayant une trajectoire courbée par rapport au centre de la roue pousseuse (1) dans une de ces première ou deuxième structures coaxiales circulaires (11, 12), des suiveurs de guidage (17) étant reliés à l'autre de ces première ou deuxième structures coaxiales circulaires (11, 12) et aménagés pour se déplacer le long de ces moyens de guidage (16) et des moyens de liaison libérables (18) pour bloquer les première et deuxième structures coaxiales circulaires (11, 12) ensemble dans une position angulaire choisie.

10. Unité conformément à la revendication 9, **caractérisée en ce que** ces suiveurs de guidage (17) sont pourvus aux extrémités de séparateurs (19) reliés à une de ces première ou deuxième structures coaxiales circulaires (11, 12) l'autre de ces première ou deuxième structures coaxiales circulaires (11, 12) reposant sur ces séparateurs (19).

11. Unité conformément à la revendication 1, **caractérisée en ce qu'**une extrémité de décharge du convoyeur d'entrée (30) comporte une surface de transfert (32) au même niveau qu'un plan de support fixe (51) aménagé au-dessous des parois du fond ouvert de goulottes (52) reliées à une structure tournante (53) d'une machine pour positionner des articles (50) ces articles étant poussés le long de ce plan de support fixe (51) par les parois de ces goulottes (52) et déviés vers cette surface de transfert (32) par des moyens déflecteurs fixes (54).

12. Unité conformément à la revendication 6 **caractérisée en ce qu'**une extrémité de décharge du convoyeur d'entrée (30) comporte une surface de transfert (32) au même niveau qu'un plan de support fixe (51) aménagé au-dessous des parois du fond ouvert de goulottes (52) reliées à une structure tournante (53) d'une machine réglable pour positionner des articles (50) ces articles étant poussés le long de ce plan de support fixe (51) par les parois de ces goulottes (52) et déviés vers cette surface de transfert (32) par des moyens déflecteurs fixes (54), les goulottes (52) de cette machine de positionnement réglable (50) ayant de multiples compartiments (55) ayant une largeur réglable pour des articles ayant des tailles différentes (A, B) la machine de positionnement réglable (50) étant capable de remplir plusieurs de ces compartiments (55) de chaque goulotte (52) avec des articles verticaux (A, B) durant chaque tour de cette structure tournante (53).

13. Unité conformément à la revendication 12, **caractérisée en ce que** ces écarts angulaires prédéterminés entre les pales radiales (2, 3) le long des première et deuxième structures coaxiales circulaires (11, 12) sont adaptés aux écarts entre les goulottes (52) dans la structure tournante (53) de la machine de positionnement réglable (50) et peuvent être réglés conformément au réglage des compartiments (55) dans les goulottes (52).

14. Unité conformément à la revendication 11, **caractérisée en ce que** ces moyens d'entraînement (6) font tourner la roue pousseuse (1) à une vitesse telle que ses pales radiales (2, 3) se déplacent à la même vitesse tangentielle que les goulottes de la structure tournante (53) de cette machine de positionnement réglable (50).
